# DEMANDE DE BREVET EUROPEEN

(11) **EP 4 215 248 A1**
(43) Date de publication de la demande: **26.07.2023**
(21) Numéro de dépôt: 23305065.7
(22) Date de dépôt: 19.01.2023
(51) Int. Cl.: A62B 25/00, A62C 13/78, B62B 5/00, A62C 31/28

(54) **CHARIOT POUR LE TRANSPORT D'AU MOINS UN ÉQUIPEMENT DE SÉCURITÉ ET/OU DE SECOURS**

(30) Priorité: 20.01.2022 FR 2200473
(71) Demandeur: Safecaddy France, 33520 Bruges (FR)
(72) Inventeur: PONS, François, 33520 BRUGES (FR)
(74) Mandataire: Plasseraud IP

(57) **Abrégé**

La présente invention concerne un chariot pour le transport d'au moins un équipement de sécurité et/ou de secours, ce chariot comprenant au moins une paire de roues d'entraînement (14), au moins une poignée de préhension (13) et un châssis (12) pour recevoir des éléments dudit équipement de sécurité et/ou de secours. Selon l'invention, ce chariot comprend :
- au moins une unité de motorisation pour entraîner au moins l'une desdites roues en mode moteur,
- un organe d'actionnement (16) pour passer d'un mode sans assistance dans lequel lesdites roues d'entraînement (14) sont libres, audit mode moteur,
- au moins un capteur choisi dans le groupe comprenant un capteur d'effort pour peser la charge transportée, un capteur d'accélération pour la détection de mouvements, un capteur d'inclinaison pour la détection de l'inclinaison dudit chariot de transport et des combinaisons de ces éléments, et
- une unité centrale pour générer au moins un signal de commande de ladite au moins une unité de motorisation en fonction d'au moins un signal de sortie de capteur lorsque le chariot est en mode moteur.

## Description

### Domaine technique

L'invention relève du domaine général du transport d'équipements de sécurité, notamment de protection incendie ou de signalisation, et/ou de secours tel que des appareils médicaux.

### Technique antérieure

En matière de sécurité incendie, la réglementation actuelle impose aux entreprises de mettre en oeuvre certains moyens de prévention et de lutte contre l'incendie.

En effet, en cas de départ de feu, la première intervention doit pouvoir être assurée par des personnes présentes dans les locaux.

Il est donc connu de disposer des extincteurs en divers points d'accès judicieusement répartis dans un bâtiment à protéger, lesquels sont repérés par des panneaux de signalisation.

Toutefois, le positionnement à demeure d'un appareil de lutte contre l'incendie n'est pas toujours possible. Tel est le cas par exemple sur un chantier en extérieur présentant des risques particuliers.

Il peut être également nécessaire de déplacer rapidement des extincteurs pour les amener au plus près d'une zone de danger, de départ de feu, par exemple dans des stations-services.

Une intervention sur le lieu d'un sinistre difficile d'accès peut encore empêcher toute intervention d'un véhicule habituel de lutte contre l'incendie et obliger son équipage à transporter rapidement un ou plusieurs extincteurs au plus près de la zone de sinistre.

Dans tous ces cas, il est alors connu d'utiliser des chariots roulants qui sont déplacés manuellement, pour transporter un ou plusieurs extincteurs et/ou d'autres matériels de secours.

Toutefois, on constate que le déplacement manuel de ces chariots reste difficile et éprouvant même pour des opérateurs aguerris tels que des pompiers ou des agents de la sécurité civile.

Les difficultés rencontrées peuvent être multiples.

Elles peuvent aussi bien résulter de la charge déplacée, notamment lorsque le chariot reçoit plusieurs extincteurs, que de contraintes liées à la nature du terrain d'intervention (terrain en pente, sols instables, relief accidenté, ...).

Un temps précieux peut alors être perdu pour parcourir la distance séparant le véhicule d'intervention de la zone de sinistre.

Il se peut même que la vie des membres de l'équipe d'intervention soit alors mise en danger.

Il existe donc un besoin pressant pour un chariot de transport d'un équipement de sécurité et/ou de secours, dont la conception originale permette de surmonter les inconvénients ci-dessus mentionnés.

### Objet de l'invention

La présente invention vise ainsi un chariot pour le transport d'au moins un équipement de sécurité et/ou de secours, simple dans sa conception et dans son mode opératoire, capable d'apporter une assistance à son déplacement par un opérateur, notamment lors du transport de charges lourdes ou sur terrain difficile d'accès ou rendu difficile d'accès suite à un sinistre.

Avantageusement, un tel chariot de transport doit pouvoir également être poussé ou tracté manuellement en fonction des souhaits de l'opérateur.

Un objet de la présente invention est un tel chariot de transport dont l'assistance varie en fonction de la charge tractée ou poussée par l'opérateur et plus généralement de la difficulté rencontrée dans le déplacement de ce chariot.

Un autre objet de la présente invention est un tel chariot de transport qui soit compact et d'un stockage aisé, et cependant susceptible de porter une charge importante.

Encore un autre objet de la présente invention est un tel chariot de transport susceptible d'être déplacé sur des sols instables ou présentant un relief accidenté, tel que celui résultant de la présence d'obstacles ou de creux tels que des nids de poule.

### Exposé de l'invention

A cet effet, l'invention concerne un chariot pour le transport d'au moins un équipement de sécurité et/ou de secours, comprenant au moins une paire de roues d'entraînement, au moins une poignée de préhension et un châssis pour recevoir des éléments dudit équipement de sécurité et/ou de secours.

Selon l'invention, ce chariot comprend :
- au moins une unité de motorisation pour entraîner au moins l'une desdites roues en mode moteur,
- un organe d'actionnement pour passer d'un mode sans assistance dans lequel lesdites roues d'entraînement sont libres, audit mode moteur,
- au moins un capteur choisi dans le groupe comprenant un capteur d'effort pour peser la charge transportée, un capteur d'accélération pour la détection de mouvements dudit chariot de transport, un capteur d'inclinaison pour la détection de l'inclinaison dudit chariot de transport et des combinaisons de ces éléments, et
- une unité centrale pour générer au moins un signal de commande de ladite au moins une unité de motorisation en fonction d'au moins un signal de sortie de capteur lorsque le chariot est en mode moteur.

Le présent chariot offre avantageusement une assistance électrique pour son déplacement, tout en pouvant être tracté ou poussé manuellement en fonction des besoins de l'opérateur.

Un capteur ou une combinaison de capteurs placés sur le chariot permettent de déterminer l'effort fourni, ou à fournir, par l'opérateur pour déplacer le chariot avec sa charge et ainsi, lorsque l'opérateur déclenche le mode moteur, d'ajuster automatiquement l'assistance électrique fournie lors du déplacement de ce dernier.

Ainsi, des informations provenant d'au moins deux types de capteurs distincts peuvent être utilisées par l'unité centrale dans la détermination de l'assistance électrique à apporter à l'utilisateur pour le déplacement du chariot.

Ce chariot est compact et peut ainsi être aisément stocké avec son équipement dans un espace de stockage réduit ou encore être transporté par un engin motorisé tel qu'un véhicule de secours conventionnel sur le lieu d'un sinistre.

Ce chariot est destiné au transport de matériel de sécurité, d'urgence et/ou encore de premiers soins.
Il est notamment adapté pour le transport d'équipement de sécurité incendie tel que des extincteurs, au plus près de la source de danger, ou encore sur un lieu difficile d'accès pour un véhicule de lutte contre l'incendie. Dans le cadre de la lutte contre des feux d'origine électrique ou des feux de matière chimique interdisant l'emploi d'eau comme agent extincteur, il peut encore s'agir d'un container recevant de la poudre ou bien du sable.
Il pourrait aussi s'agir d'éléments de sécurité routière ou encore de signalisation tels que des cônes, des feux tricolores, des feux de chantier, des panneaux, ...
Il peut également recevoir du matériel de premiers soins et/ou au moins un dispositif médical tel qu'un défibrillateur.

Selon un mode de réalisation particulier de ce chariot pour le transport d'au moins un équipement de sécurité et/ou de secours, chaque unité de motorisation est un moteur électrique et le chariot comporte une batterie ou un agencement d'accumulateurs électriques pour alimenter ce ou ces moteurs.

De préférence, chaque roue comporte son propre moteur électrique pour assurer son entraînement, ces moteurs électriques recevant des signaux de commande de ladite unité centrale.
Chaque roue d'entraînement du chariot de transport est ainsi autonome.

Selon un autre mode de réalisation particulier de ce chariot pour le transport d'au moins un équipement de sécurité et/ou de secours, cet organe d'actionnement est choisi dans le groupe comprenant une poignée, une pédale ou encore un organe de commande tel qu'un bouton poussoir.

Selon encore un autre mode de réalisation particulier de ce chariot pour le transport d'au moins un équipement de sécurité et/ou de secours, ce chariot comporte un second organe d'actionnement pour passer d'un mode dit de « chariot tracté » dans lequel l'opérateur tracte le chariot, à un mode dit de « chariot poussé » dans lequel l'opérateur pousse le chariot, et inversement. De manière avantageuse, ce chariot présente ainsi deux sens de marche.
A titre d'exemple, les deux organes distincts d'actionnement sont placés sur une poignée de préhension.

Selon encore un autre mode de réalisation particulier de ce chariot pour le transport d'au moins un équipement de sécurité et/ou de secours, chaque capteur est équipé d'un module de communication sans fil, tel que par radio.

Selon encore un autre mode de réalisation particulier de ce chariot pour le transport d'au moins un équipement de sécurité et/ou de secours, ce chariot comporte au moins un capteur d'inclinaison associé à un axe de référence dudit chariot, ladite unité centrale étant configurée pour émettre un signal de commande déclenchant une modification de l'entrainement dudit chariot en mode moteur, lorsque certains signaux de capteur prédéterminés sont détectés. A titre purement illustratif, l'axe de référence peut être parallèle à, ou confondu, avec un axe principal du chariot de transport.
Par exemple, ce dernier comportant un cadre allongé s'étendant verticalement par rapport à une base, ce cadre allongé comportant des attaches pour la fixation d'un ou plusieurs extincteurs reposant sur la base, ce cadre allongé définit un axe principal du chariot.

De préférence, lorsque l'angle d'inclinaison détectée est supérieur à une valeur seuil prédéterminée, ladite unité centrale est configurée pour émettre au moins un signal de commande entraînant une augmentation de l'assistance de ladite au moins une unité de motorisation. A titre purement illustratif, il peut alors s'agir d'une action sur la vitesse d'entraînement moteur et/ou sur le couple moteur.
De manière avantageuse, plusieurs valeurs seuil étant prévues, l'augmentation de l'assistance électrique est réalisée par palier.

Ainsi, plus l'angle d'inclinaison détectée est important et plus l'assistance moteur ou encore électrique est importante.

Par la détection de l'angle d'inclinaison, l'adaptation de l'assistance moteur se fait avantageusement en temps réel.

Selon encore un autre mode de réalisation particulier de ce chariot pour le transport d'au moins un équipement de sécurité et/ou de secours, l'angle d'inclinaison détectée étant nul ou inférieur à une valeur seuil, le chariot est configuré pour maintenir l'unité de motorisation à l'arrêt.
Par exemple, dans ce cas, l'unité centrale est configurée pour ne pas envoyer de signal de commande.

Selon encore un autre mode de réalisation particulier de ce chariot pour le transport d'au moins un équipement de sécurité et/ou de secours, ledit capteur d'inclinaison est un inclinomètre.

Selon encore un autre mode de réalisation particulier de ce chariot pour le transport d'au moins un équipement de sécurité et/ou de secours, ledit capteur d'effort est une jauge de déformation.
Bien entendu, le chariot peut comporter plusieurs jauges de déformation pour la pesée de la charge à transporter.
A titre d'exemple, le chariot comprenant un plateau pour supporter plusieurs charges tels que des extincteurs, ce plateau présente des jauges de déformation judicieusement placées pour déterminer le poids de l'ensemble de ces charges.

Selon encore un autre mode de réalisation particulier de ce chariot pour le transport d'au moins un équipement de sécurité et/ou de secours, le châssis dudit chariot de transport est un châssis de diable comportant des attaches et/ou des contenants pour recevoir des éléments dudit équipement de sécurité et/ou de secours.
A titre d'exemple, ce chariot peut comporter des attaches telles des sangles et dans sa partie inférieure une base sous la forme d'un plateau pour supporter un ou plusieurs extincteurs.

Selon encore un autre mode de réalisation particulier de ce chariot pour le transport d'au moins un équipement de sécurité et/ou de secours, lesdites roues d'entraînement sont des roues tout terrain.
De telles roues assurent au chariot la capacité de franchir des terrains accidentés ou encore de se déplacer sur des sols instables.
On entend par "sols instables", des sols boueux, détrempés, ...
Ces roues peuvent avantageusement être gonflables.
Il est encore possible d'ajouter un sabot sous le chariot pour l'aider à franchir des passages de terrain instable ou irrégulier.

Selon encore un autre mode de réalisation particulier de ce chariot pour le transport d'au moins un équipement de sécurité et/ou de secours, il est réalisé au moins en partie dans des matériaux ignifuges pour résister au feu. De préférence, il est intégralement réalisé dans des matériaux ignifuges.

### Brève description des dessins

D'autres avantages, buts et caractéristiques particulières de la présente invention ressortiront de la description qui va suivre, faite, dans un but explicatif et nullement limitatif, en regard des dessins annexés, dans lesquels :
**Fig. 1**

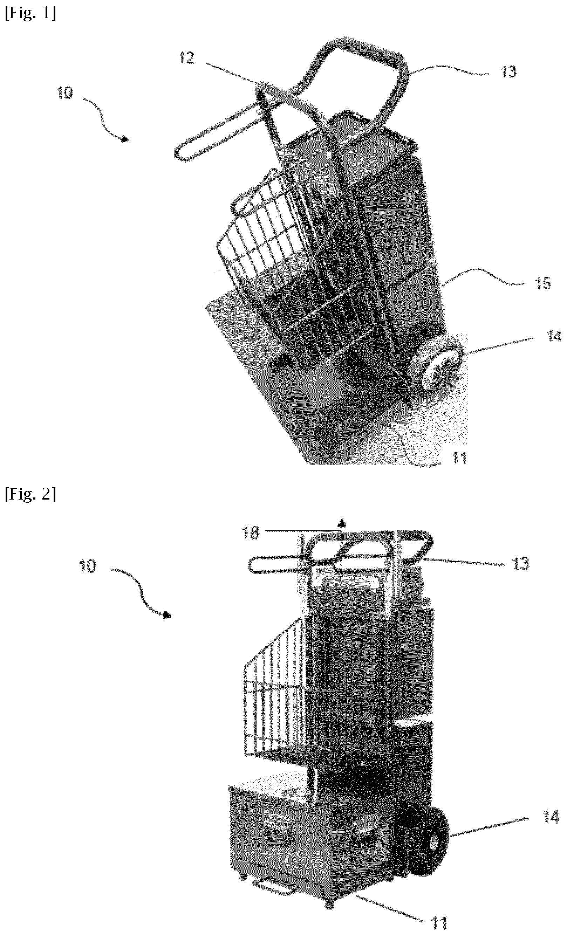

   [Fig. 1] est une vue en perspective d'un chariot pour le transport d'au moins un équipement de sécurité selon un mode de réalisation particulier de la présente invention ;
**Fig. 2**
   [Fig. 2] est une vue de profil avant gauche du chariot de la Fig.1.
**Fig. 3**

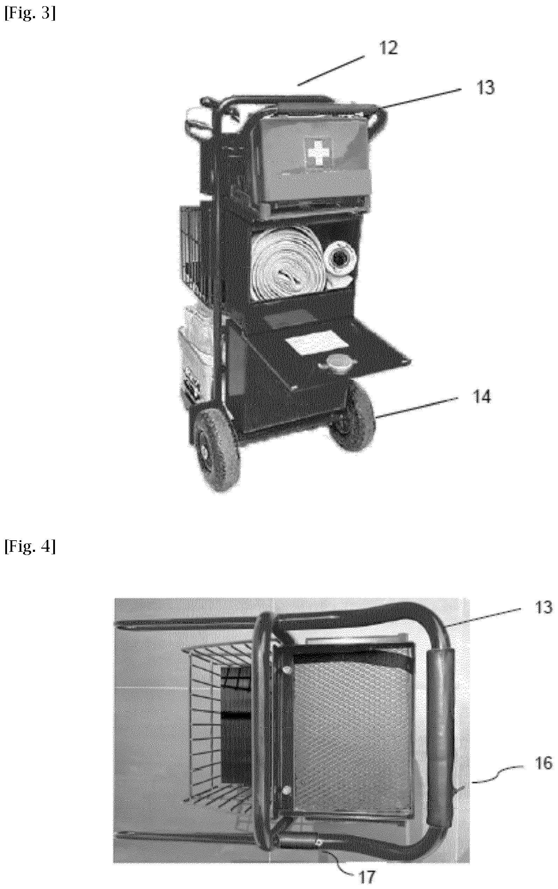

   [Fig. 3] est une vue de profil arrière gauche du chariot de la Fig.1.
**Fig. 4**
   [Fig. 4] est une vue de dessus du chariot de la Fig.1.
**Fig. 5**

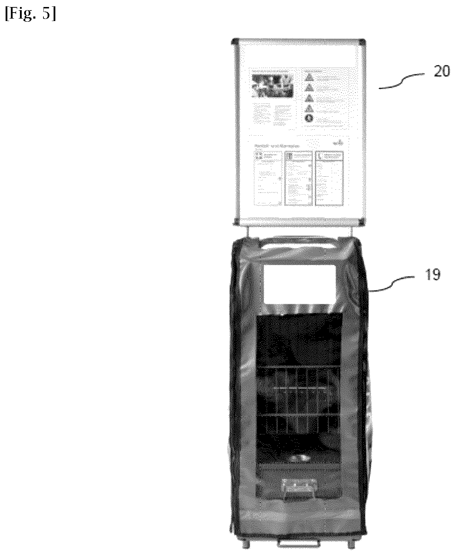

   [Fig. 5] montre le chariot de la Fig.1 recouvert d'une housse de protection et portant un panneau de signalisation.

### Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Tout d'abord, on note que les figures ne sont pas à l'échelle.

Les Figures 1 à 5 illustrent un chariot pour le transport d'un équipement de sécurité selon un mode de réalisation particulier de la présente invention.

Un tel chariot constitue, avantageusement, un engin motorisé léger tout terrain permettant d'acheminer rapidement un ou plusieurs extincteurs dans une zone de danger, sans fatiguer l'opérateur assurant le contrôle et le déplacement de celui-ci.

Ce chariot de transport 10 présente ici la structure d'un diable, de manière à être léger et compact pour permettre son passage ou son stockage dans des espaces étroits, tout en autorisant le transport d'une charge élevée.

Il comporte une base formée par un plateau 11 à partir duquel s'élève verticalement un châssis 12 allongé formé d'un assemblage de tubes. A partir de ce châssis 12 s'étend une poignée de préhension 13 permettant à un opérateur de manoeuvrer le chariot de transport 10.

Ce chariot 10 comporte également deux roues 14 d'entraînement tout terrain, lesquelles sont reliées à un moteur électrique (non représenté) pour entraîner celles-ci en mode moteur du chariot.

Une batterie placée dans un contenant tel qu'une boîte 15, situé dans la partie inférieure du chariot 10 permet d'alimenter en énergie ce moteur électrique ainsi que les différents accessoires et/ou équipements de ce chariot 10. Cette batterie peut être amovible pour être rechargée séparément.
De manière avantageuse, il est possible de prévoir sur le chariot une interface pour un branchement sur chargeur (ponctuel) ou pour un branchement sur chargeur intelligent, dit "en floating" (permanent). Potentiellement, ce chargement peut être réalisé sur un support adapté, le mode de charge pouvant être réalisé par induction ou conduction.

Un premier organe d'actionnement 16 tel qu'un bouton poussoir, placé sur la poignée de préhension 13 permet par un maintien enfoncé, de passer d'un mode sans assistance du chariot de transport 10 dans lequel lesdites roues d'entraînement sont libres, au mode moteur.

Lorsque l'opérateur relâche cet organe d'actionnement 16, le chariot 10 revient automatiquement en mode sans assistance, le moteur étant à l'arrêt.

Un second organe d'actionnement 17 placé sur cette poignée de préhension 13 permet de déterminer le sens de marche, mode dit tracté ou mode dit poussé, du chariot en fonction des besoins de l'utilisateur.

Ce chariot de transport 10 comporte également un capteur d'inclinaison (non représenté) associé à un axe de référence 18 du chariot pour détecter en temps réel l'inclinaison de ce chariot.

Ce capteur d'inclinaison qui est ici un inclinomètre, est agencé à la fois sur l'axe de référence 18 du chariot 10 et dans la partie médiane du châssis 12 tout en étant dirigé vers l'arrière du chariot pour avoir une vision directe sur le sol lorsque le chariot 10 est incliné sans être gêné par l'équipement transporté.

Il comporte encore une unité centrale (non représentée) pour générer lorsque le chariot 10 est en mode moteur, des signaux de commande de moteur en fonction d'au moins un signal de sortie de capteur d'inclinaison.

Cette unité centrale comporte un processeur pour traiter les signaux de sortie de capteur reçus.

De manière avantageuse, lorsque l'angle d'inclinaison détectée est supérieur à une valeur seuil prédéterminée, cette unité centrale est configurée pour émettre des signaux de commande entraînant une augmentation de l'assistance du moteur électrique de manière à faciliter le déplacement du chariot.

Comme illustré à la Fig. 5, ce chariot peut recevoir une housse 19 de protection de préférence ignifuge pour protéger l'équipement de sécurité ainsi transporté.

Cette housse 19 de protection est agencée pour autoriser l'installation d'un panneau 20 de signalisation sur le chariot 10, ce panneau donnant par exemple des consignes de sécurité. Alternativement, ou en supplément, le chariot pourrait recevoir une alarme incendie et/ou un gyrophare pour indiquer le point de ralliement en cas d'urgence.

## Revendications

1. Chariot pour le transport d'au moins un équipement de sécurité et/ou de secours, ledit chariot comprenant au moins une paire de roues d'entraînement (14), au moins une poignée de préhension (13) et un châssis (12) pour recevoir des éléments dudit équipement de sécurité et/ou de secours, **caractérisé en ce qu'**il comprend :
- au moins une unité de motorisation pour entraîner au moins l'une desdites roues en mode moteur,
- un organe d'actionnement (16) pour passer d'un mode sans assistance dans lequel lesdites roues d'entraînement (14) sont libres, audit mode moteur,
- au moins un capteur choisi dans le groupe comprenant un capteur d'effort pour peser la charge transportée, un capteur d'accélération pour la détection de mouvements, un capteur d'inclinaison pour la détection de l'inclinaison dudit chariot de transport et des combinaisons de ces éléments, et
- une unité centrale pour générer au moins un signal de commande de ladite au moins une unité de motorisation en fonction d'au moins un signal de sortie de capteur lorsque le chariot est en mode moteur.

2. Chariot pour le transport d'au moins un équipement de sécurité et/ou de secours selon la revendication 1, **caractérisé en ce que** chaque unité de motorisation est un moteur électrique et **en ce que** ledit chariot comporte un agencement d'accumulateurs électriques pour alimenter ce ou ces moteurs.

3. Chariot pour le transport d'au moins un équipement de sécurité et/ou de secours selon la revendication 1 ou 2, **caractérisé en ce que** chaque roue (14) comporte son propre moteur électrique pour assurer son entraînement, lesdits moteurs électriques recevant des signaux de commande de ladite unité centrale.

4. Chariot pour le transport d'au moins un équipement de sécurité et/ou de secours selon l'une quelconque des revendications 1 à 3, **caractérisé en ce qu'**il comporte un second organe d'actionnement (17) pour passer d'un mode dit de « chariot tracté » dans lequel l'opérateur tracte le chariot, à un mode dit de « chariot poussé » dans lequel l'opérateur pousse le chariot, et inversement.

5. Chariot pour le transport d'au moins un équipement de sécurité et/ou de secours selon l'une quelconque des revendications précédentes, **caractérisé en ce que** chaque capteur est équipé d'un module de communication sans fil, tel que par radio.

6. Chariot pour le transport d'au moins un équipement de sécurité et/ou de secours selon l'une quelconque des revendications précédentes, **caractérisé en ce qu'**il comporte au moins un capteur d'inclinaison associé à un axe de référence (18) dudit chariot, ladite unité centrale étant configurée pour émettre un signal de commande déclenchant une modification de l'entrainement dudit chariot en mode moteur, lorsque certains signaux de capteur prédéterminés sont détectés.

7. Chariot pour le transport d'au moins un équipement de sécurité et/ou de secours selon la revendication 6, **caractérisé en ce que** l'angle d'inclinaison détectée étant supérieur à une valeur seuil prédéterminée, ladite unité centrale est configurée pour émettre au moins un signal de commande entraînant une augmentation de l'assistance de ladite au moins une unité de motorisation.

8. Chariot pour le transport d'au moins un équipement de sécurité et/ou de secours selon l'une quelconque des revendications précédentes, **caractérisé en ce que** l'angle d'inclinaison détectée étant nul ou inférieur à une valeur seuil, le chariot est configuré pour maintenir l'unité de motorisation à l'arrêt.

9. Chariot pour le transport d'au moins un équipement de sécurité et/ou de secours selon l'une quelconque des revendications précédentes, **caractérisé en ce que** ledit capteur d'inclinaison est un inclinomètre.

10. Chariot pour le transport d'au moins un équipement de sécurité et/ou de secours selon l'une quelconque des revendications précédentes, **caractérisé en ce que** le châssis (12) dudit chariot de transport est un châssis de diable comportant des attaches et/ou des contenants pour recevoir des éléments dudit équipement de sécurité et/ou de secours.

11. Chariot pour le transport d'au moins un équipement de sécurité et/ou de secours selon l'une quelconque des revendications précédentes, **caractérisé en ce que** lesdites roues d'entraînement (14) sont des roues tout terrain.

12. Chariot pour le transport d'au moins un équipement de sécurité et/ou de secours selon l'une quelconque des revendications précédentes, **caractérisé en ce qu'**il est réalisé au moins en partie dans des matériaux ignifuges pour résister au feu.
